# EUROPÄISCHE PATENTSCHRIFT

(11) **EP 2 127 542 B1**
(45) Veröffentlichungstag und Bekanntmachung des Hinweises auf die Patenterteilung: **27.10.2010**
(21) Anmeldenummer: 08009575.5
(22) Anmeldetag: 26.05.2008
(51) Int. Cl.: A23L 2/52, A23L 1/05

(54) **Mehrlagiges Getränk und Verfahren zu seiner Herstellung**
Multilayered drink and method for its production
Boisson en plusieurs couches et son procédé de fabrication

(43) Veröffentlichungstag der Anmeldung: 02.12.2009
(73) Patentinhaber: RUDOLF WILD GmbH & CO. KG, 69214 Eppelheim (DE)
(72) Erfinder: Wild, Hans-Peter, 69214 Eppelheim (DE); Chatard, Dominique, 69121 Heidelberg (DE); Sattler, Robert, 68723 Oftersheim (DE); Schütz, Katrin, 69214 Eppelheim (DE)
(74) Vertreter: Grünecker, Kinkeldey, Stockmair & Schwanhäusser Anwaltssozietät

(56) Entgegenhaltungen:
- EP-A- 1 415 548
- WO-A-00/30470
- WO-A-2005/046409
- FR-A- 2 655 241

## Beschreibung

Die vorliegende Erfindung betrifft ein mehrlagiges Getränk und ein Verfahren zu seiner Herstellung.

Es besteht ein großes Interesse daran, Getränke sowohl geschmacklich als auch optisch ansprechend anzubieten. Ein aus mehreren getrennten Lagen bestehendes Getränk wirkt aufgrund der Farbenfülle und der verschiedenen, voneinander getrennten Lagen besonders attraktiv, da jede Lage einzeln oder eine Kombination verschiedener Lagen getrunken werden kann. Ein solches Produkt und eine einfache und schnelle Herstellung eines solchen Produktes ist in der Gastronomie deshalb von besonderem Interesse.

Allgemein gibt es zur Herstellung eines mehrlagigen Getränks folgende Möglichkeiten:
- Schichtung aufgrund von Dichteunterschieden
- Schichtung aufgrund von Viskositätsunterschieden
- Schichtung aufgrund einer Kombination aus Dichte- und Viskositätsunterschieden
- Schichtung aufgrund unterschiedlicher Aggregatzustände (flüssig, gefroren, schaumig)

Mehrlagige Getränke, die aufgrund eines Dichteunterschieds geschichtet sind, sind zum Beispiel Cocktails. Zur Herstellung eines mehrlagigen Cocktails bedarf es einer besonders vorsichtigen Kombination der einzelnen Lagen. Dabei werden die einzelnen Bestandteile des Getränks vorsichtig über einen Löffel eingegossen, so dass sie sich nicht vermischen. Damit ist es möglich, mehrere farblich unterschiedliche Lagen zu bilden. Die dabei verwendeten Bestandteile werden nach der Dichte geschichtet. So wird zuerst als untere Lage der Bestandteil mit der höchsten Dichte in das Gefäß gefüllt. Die weiteren Bestandteile werden mit abnehmender Dichte jeweils eingefüllt. Diese einzelnen Lagen sind jedoch nicht stabil; nach einiger Zeit tritt eine vollständige Vermischung ein. Auch sind die Bestandteile nicht durch eine klare Phasengrenze getrennt.

Mehrlagige Softdrinks lassen sich ebenfalls durch Überschichtung von einzelnen Getränkelagen, wie z.B. Säften, herstellen. Auch hier sind die einzelnen Bestandteile so gewählt, dass aufgrund eines Dichteunterschieds mehrere getrennte Lagen vorliegen. Allerdings tritt ebenfalls nach einiger Zeit eine Vermischung ein.

Eine Schichtung aufgrund eines Dichteunterschiedes ist auch in der WO 2005/046409 beschrieben. Diese Druckschrift offenbart ein Verfahren und eine Vorrichtung zur Herstellung von mehrlagigen Getränken. Durch einen Dichteunterschied zwischen den einzelnen flüssigen Lagen ist es möglich, ein Getränk herzustellen, das deutlich voneinander getrennte und stabile Lagen aufweist. Der gewünschte Dichteunterschied der einzelnen Lagen wird dadurch erreicht, dass ein Getränkekonzentrat durch Zugabe von Wasser auf eine bestimmte Dichte eingestellt wird. Dabei ist es notwendig, dass der Dichteunterschied zwischen den einzelnen Lagen mindestens 0,1% beträgt, um deutlich voneinander getrennte Lagen zu erhalten. Allerdings ist eine langsame Zugabe der einzelnen Lagen notwendig, um Turbulenzen zu reduzieren. Um das Vermischen der einzelnen Lagen aufgrund von Diffusion oder Konvektion der Flüssigkeiten zu minimieren, muss nach Zugabe einer Lage eine Pause eingelegt werden. Insbesondere für Heißgetränke ist zusätzlich eine Kontrolle der Temperatur der einzelnen Lagen notwendig. Da bei höheren Temperaturen stärkere Turbulenzen und beschleunigte Diffusion auftreten, müssen die einzelnen Lagen einen Temperaturgradienten aufweisen, wobei die untere Lage kälter als die obere Lage sein muss. Somit stellt das beschriebene Verfahren ein zeitaufwendiges und kompliziertes Verfahren dar. Bei Fruchtsäften ist zudem noch zu beachten, dass verschiedene Fruchtsäfte im Allgemeinen eine sehr ähnliche Dichte aufweisen. Daher ist es notwendig, die Dichte durch Zugabe eines Beschwerungsmittels, wie z. B. Zucker, zu erhöhen.

Eine Schichtung aufgrund von Viskositätsunterschieden wird in Research Disclosure 2001, Band 443, Seite 388, ID-Nr. 443053 beschrieben. Dann wird ein zweilagiges Getränk, dessen einzelne Lagen einen Viskositätsunterschied aufweisen, hergestellt. Dabei enthalten die einzelnen Lagen unterschiedliche Hydrokolloide in wässriger Lösung, z.B. Propylen-Glycol-Alginat und modifizierte Stärke. Zusätzlich können in einzelnen Lagen Farbstoffe und Geschmacksstoffe zugesetzt werden. Die einzelnen Lagen können sich auch nach Mischen des Getränks wieder ausbilden. Eine hohe Viskosität bewirkt jedoch ein unangenehmes Mundgefühl beim Verbraucher.

Eine Schichtung aufgrund einer Kombination aus Dichte- und Viskositätsunterschieden wird in der EP-A-1 415 548 beschrieben. Darin wird ein Zweiphasengetränk offenbart, wobei die untere Phase eine mindestens 0,02 kg/dm³ (20 kg/m³) höhere Dichte als die obere Phase aufweist. Zusätzlich enthält eine der Phasen Xanthan zur Modifikation der Viskosität, und in der anderen Phase wird mindestens ein weiteres Hydrokolloid zugesetzt. Die Hydrokolloide dienen als Stabilisatoren, um eine klare Trennung der beiden Phasen zu ermöglichen. Hierbei weisen die einzelnen Phasen sowohl einen Dichteunterschied als auch eine unterschiedliche Viskosität auf, um ein Vermischen zu erschweren. Allerdings ist es trotz der Verwendung von Hydrokolloiden als Stabilisatoren notwendig, dass der Dichteunterschied der einzelnen Phasen mindestens 0,02 kg/dm³ (20 kg/m³) beträgt. Ist die Dichte der unteren Phase kleiner als 1,094 kg/dm³ (1094 kg/m³) und die Dichte der oberen Phase kleiner als 1,05 kg/dm³ (1050 kg/m³), wird eine deutliche Phasentrennung nur dann erreicht, wenn der Dichteunterschied mindestens 0,03 (30 kg/m³) oder 0,04 kg/dm³ (40 kg/m³) beträgt.

Eine Schichtung aufgrund von unterschiedlichen Aggregatzuständen ist z. B. von Kaffeegetränken bekannt, die eine obere Lage aus Milchschaum besitzen. Eine solche Schaumlage ist jedoch nicht stabil, sondern fällt nach einiger Zeit in sich zusammen. Auch eine gefrorene Lage ist nicht stabil, da nach Stehen bei Raumtemperatur diese Lage schmilzt.

Aufgabe der vorliegenden Erfindung ist es, ein mehrlagiges Getränk zur Verfügung zu stellen, das möglichst einfach und schnell hergestellt werden kann und eine dauerhafte und deutliche Trennung der Lagen sowie stabile Lagen aufweist.

Diese Aufgabe wird durch ein mehrlagiges Getränk gelöst, das dadurch gekennzeichnet ist, dass die benachbarten Lagen einen Dichteunterschied von 0,4 bis 10 kg/m³ aufweisen und jede Lage mindestens ein Hydrokolloid enthält.

Die Aufgabe wird auch durch ein Verfahren zur Herstellung eines solchen mehrlagigen Getränks gelöst, das dadurch gekennzeichnet ist, dass mehrere Lagen getrennt voneinander mit mindestens einem Hydrokolloid gemischt werden, eine dieser Lagen in einen Behälter eingefüllt wird, anschließend die benachbarte Lage mittels einer Füllvorrichtung zudosiert wird, und gegebenenfalls mindestens eine weitere Lage auf gleiche Weise zudosiert wird, wobei die benachbarten Lagen einen Dichteunterschied von 0,4 bis 10 kg/m³ aufweisen.

Erfindungsgemäß werden unter dem Begriff "mehrlagig" optisch deutlich getrennte Bereiche verschiedener Flüssigkeiten verstanden. Dabei kann eine jeweilige Lage auch ein nichthomogener Bereich sein, wie eine Emulsion. Somit unterscheidet sich der Begriff "Lage" von Phase, da eine Phase einen homogenen Bereich darstellt.

Das erfindungsgemäße Getränk umfasst vorzugsweise zwei, drei, vier, fünf oder sechs Lagen. Besonders bevorzugt besteht das Getränk aus drei oder vier Lagen.

Die benachbarten Lagen in dem erfindungsgemäßen Getränk weisen einen Dichteunterschied von 0,4 bis 10 kg/m³ auf. Bevorzugt beträgt der Dichteunterschied der benachbarten Lagen 0,4 bis 5 kg/m³, besonders bevorzugt 0,4 bis 1 kg/m³.

Jede Lage des erfindungsgemäßen Getränks enthält mindestens ein Hydrokolloid; bevorzugt enthält jede Lage das gleiche Hydrokolloid. Die verwendeten Hydrokolloide erhöhen die Viskosität der jeweiligen Lage. Durch die Viskositätserhöhung werden die einzelnen Lagen stabilisiert. Die Hydrokolloide dienen somit als Verdickungsmittel, Bindemittel und Stabilisatoren und verleihen den einzelnen Lagen eine gewünschte Konsistenz und Textur.

Erfindungsgemäß können alle üblichen Hydrokolloide, wie Xanthan, Johannisbrotkernmehl, Stärke, modifizierte Stärke, Guarkemmehl, Pektin, modifizierte Cellulose, Agar, Carageen, Alginat, Gelatine, Gummi arabicum oder Mischungen daraus verwendet werden. Vorzugsweise werden Pektin, Johannisbrotkernmehl oder Carboxymethylcellulose, besonders bevorzugt Carboxymethylcellulose als Hydrokolloide verwendet. Bevorzugt enthält jede Lage des erfindungsgemäßen Getränks Carboxymethylcellulose. Durch die alleinige Verwendung von Carboxymethylcellulose kann eine klare Lösung erhalten werden, die in klaren Getränkelagen eingesetzt werden kann.

Der Hydrokolloidgehalt in dem erfindungsgemäßen Getränk beträgt üblicherweise 0,05 bis 2 Gew.-%. Bevorzugt enthält das erfindungsgemäße Getränk 0,1 bis 0,5 Gew.-% mindestens eines Hydrokolloids, besonders bevorzugt 0,2 bis 0,3 Gew.-% mindestens eines Hydrokolloids.

Wenn es sich um ein alkoholisches Getränk handelt, enthalten die einzelnen Lagen vorzugsweise 10 bis 30 Gew.-% Alkohol.

Das erfindungsgemäße mehrlagige Getränk kann herkömmliche Getränkegrundstoffe enthalten. Hierzu zählen Grundstoffe für klare, safthaltige Getränke, für trübe, safthaltige Getränke, für Emulsionsgetränke, für Colagetränke, für Tee- und Kaffeegetränke, für Near-Watergetränke (Getränke ohne Fruchtsaftgehalt), für Sojagetränke, für Milchgetränke, für Malzgetränke, für Energiegetränke und für Sportgetränke. Bevorzugt enthält das mehrlagige Getränk Grundstoffe für klare Getränke oder trübe, fruchthaltige Getränke, besonders bevorzugt klare Getränkegrundstoffe. Des Weiteren können auch unterschiedliche Getränkegrundstoffe in Kombination verwendet werden.

Wenn das erfindungsgemäße Getränk ein safthaltiges Getränk ist, weist das mehrlagige Getränk einen Fruchtgehalt von 3 bis 100% auf. Vorzugsweise beträgt der Fruchtgehalt 10 bis 60%, besonders bevorzugt 20 bis 30%.

In den Saftgetränken können Früchte jeglicher Art enthalten sein. Als besonders ansprechend haben sich mehrlagige Getränke, basierend auf Kombinationen aus Karotte/Limette/Blutorange, Apfel/Kirsch/Orange und Kirsch/Mango/Blutorange, herausgestellt.

Weiterhin kann eine oder mehrere der flüssigen Lagen feste Bestandteile beinhalten, z. B. Fruchtpartikel definierter Größe, beschichtete Nanopartikel und/oder mit Hydrokolloiden gebundene Fruchtbestandteile. Eine oder mehrere Lagen kann eine Emulsion sein.

Das erfindungsgemäße Getränk kann natürliche und/oder künstliche Süßungsmittel enthalten. Übliche natürliche Süßungsmittel sind z. B. Kohlenhydrate, wie Zucker, Invertzuckersirup, Glukosesirup oder Fruktosesirup, natürliche Süßstoffe, wie Thaumatin oder Neohesperidin, und Zuckeralkohole, wie Sorbit, Maltit, Mannit, Isomalt, Maltitol-Sirup, Xylit oder Laktit. Übliche künstliche Süßstoffe sind z. B. Aspartam, Acesulfam, Natrium-Cyclamat, NatriumSaccharin oder Sukralose. Diese Süßungsmittel können einzeln oder in Kombination aus zwei oder mehreren Süßungsmitteln eingesetzt werden. Bevorzugt wird das erfindungsgemaße Getränk mit Kohlenhydraten gesüßt, besonders bevorzugt mit Invertzuckersirup.

Weiterhin kann das erfindungsgemäße mehrlagige Getränk als weitere Zusätze Zitronensäure, Tri-Natrium-Citrat, Geschmacksstoffe, Aromastoffe, Farbstoffe, Fruchtkonzentrate, funktionelle Inhaltsstoffe, Emulgatoren, Konservierungsstoffe, fetthaltige Substanzen, Milchprodukte, Sahne, Joghurt, Molke und Buttermilch, sowie Kombinationen aus zwei oder mehr Zusätze, enthalten. Bevorzugte Zusätze sind Fruchtkonzentrate, Zitronensäure, Tri-Natrium-Citrat, Geschmacksstoffe, Aromastoffe, Farbstoffe, funktionelle Inhaltsstoffe, Emulgatoren, besonders bevorzugt sind Fruchtkonzentrate, Aromastoffe, Zitronensäure, funktionelle Inhaltsstoffe, Farbstoffe.

Das erfindungsgemäße Getränk kann ein oder mehrere Beschwerungsmittel enthalten. Als Beschwerungsmittel können beispielsweise Glukosesirup, Maltodextrin, Saccharose, Dextrose, Fructose und lösliche Ballaststoffe verwendet werden. Bevorzugt enthält das erfindungsgemäße mehrlagige Getränk Invertzuckersirup, Glucosesirup, Saccharose, besonders bevorzugt Invertzuckersirup.

Das erfindungsgemäße mehrlagige Getränk weist stabile, deutlich voneinander getrennte Lagen auf, die auch nach Stehen über einen Zeitraum von 24 h noch eine Trennung aufweisen.

Durch die verwendeten geringen Mengen an Hydrokolloiden ist die Viskosität der einzelnen Lagen niedrig. Damit wird für den Verbraucher ein angenehmes Mundgefühl erzeugt.

Bei der Verwendung von trüben Getränkegrundstoffen hat eine vorhandene Trübung keinen Einfluss auf die Trennung der Lagen. Auch bei Zusatz von Alkohol sind die Lagen stabil.

Das Getränk ist bei normalem Transport, beispielsweise wenn es auf einem Tablett getragen wird, stabil.

Es ist vorteilhaft, dass bei der Herstellung des erfindungsgemäßen Getränks nicht zuviel Luft in die Lagen eingerührt wird bzw. eine ausreichende Standzeit zur Entgasung eingehalten wird, damit vorhandene Luftblasen aus der Mischung entweichen können. Wenn die obere Lage eine geschäumte Lage ist, werden nur die darunter liegenden Lagen entgast.

In dem erfindungsgemäßen Verfahren kann eine Füllvorrichtung jeglicher Art verwendet werden. Die Füllvorrichtung ist bevorzugt ein Langrohrfüllventil oder ein Strohhalm. Weiterhin ist die Füllvorrichtung vorzugsweise so konzipiert, dass die Flüssigkeit an den Wänden des Behälters ausgerichtet wird. Die Füllvorrichtung kann in bereits eingefüllte Flüssigkeit eintauchen.

Wird als Füllvorrichtung ein Strohhalm verwendet, kann dieser anschließend mit dem Getränkebehälter an den Kunden weitergegeben werden. Somit ist keine nachfolgende Reinigung der Füllvorrichtung notwendig, und das Risiko einer mikrobiellen Kontamination der Grundstoffe wird deutlich verringert.

### Beispiele

Es wurde ein erfindungsgemäßes Getränk mit den folgenden Lagen hergestellt:

### Beispiel 1

| **Obere Lage** | |
|---|---|
| Rohstoff | Anteil Gew.-% |
| Grundstoff Apfel | 10,5 |
| CMC | 0,25 |
| Wasser | 89,25 |
| | |
| Dichte | 1032 kg/m³ |
| Viskosität | 28,7 mPa*s |
| Brix | 7,5°Brix |
| | |

| **Mittlere Lage** | |
|---|---|
| Rohstoff | Anteil Gew.-% |
| Grundstoff Kirsche | 2 |
| Zucker, fest | 9 |
| CMC | 0,25 |
| Wasser | 88,75 |
| | |
| Dichte | 1040 kg/m³ |
| Viskosität | 10,8 mPa*s |
| Brix | 9,8°Brix |
| | |

| **Untere Lage** | |
|---|---|
| Rohstoff | Anteil Gew.-%. |
| Grundstoff Orange | 2 |
| Zucker, fest | 10 |
| CMC | 0,25 |
| Wasser | 87,75 |
| | |
| Dichte | 1050 kg/m³ |
| Viskosität | 7 mPa*s |
| Brix | 12°Brix |

Die einzelnen Lagen wurden separat hergestellt. Dabei wurde das Hydrokolloid jeweils in der angegebenen Menge kaltem Wasser oder einem Teil davon vollständig gelöst. Sofern eine Lage Zucker enthielt, wurde der Zucker in dem restlichen Wasser gelöst. Dann wurden der Grundstoff, die Zuckerlösung und die Hydrokolloidlösung zusammengegeben und mittels eines Rührwerks vermischt.

Anschließend wurden die Lagen entgast und mittels einer Füllvorrichtung ihrer Dichte entsprechend geschichtet. In den Behälter wurde zuerst die obere Lage eingefüllt, dann erfolgte eine Unterschichtung mit der mittleren Lage und anschließend eine Unterschichtung mit der unteren Lage. Die Unterschichtung erfolgte in der Reihenfolge mit zunehmender Dichte. Aufgrund des Dichteunterschiedes und der erhöhten Viskosität kam es zu keiner Vermischung der Lagen. Die Schichtung blieb auch bei Bewegen des Behälters (Tragen) erhalten. Durch abwechselnd trübe und klare Getränkelagen erhielt man zudem einen optisch ansprechenden Kontrast.

### Vergleichsbeispiel 1

| **Obere Lage** | |
|---|---|
| Rohstoff | Anteil in Gew.-% |
| Karottensaftkonzentrat | 14,3 |
| Wasser | 85,7 |
| Dichte: 1040 kg/m³ | |
| | |

| **Mittlere Lage** | |
|---|---|
| Rohstoff | Anteil in Gew.-% |
| Traubensaftkonzentrat | 24,5 |
| Wasser | 75,5 |
| Dichte: 1045 kg/m³ | |
| | |

| **Untere Lage** | |
|---|---|
| Rohstoff Anteil | in Gew.-% |
| Mangopüreekonzentrat | 24,7 |
| Wasser | 75,3 |
| Dichte: 1050 kg/m³ | |

Die angegebene Menge des Saftkonzentrats wurde mit der beschriebenen Menge Wasser vermischt. Die Lagen wurden entgast und wie unter Beispiel 1 beschrieben geschichtet.

Es wurde kein stabiles mehrlagiges Getränk erhalten. Eine kurzfristige Schichtung war zwar möglich, jedoch trat bei geringen Erschütterungen, z. B. durch das Bewegen des Behälters, eine Vermischung oder Durchdringung der einzelnen Schichten ein.

### Vergleichsbeispiel 2

| **Obere Lage** | |
|---|---|
| Rohstoff | Anteil in Gew.-% |
| Aroma-Grundstoff 1 (lila) | 0,5 |
| CMC | 0,2 |
| Wasser | 97,3 |
| Dichte: 1003 kg/m³ | |
| | |

| **Untere Lage** | |
|---|---|
| Rohstoff | Anteil in Gew.-% |
| Aroma-Grundstoff 2 (gelb) | 0,5 |
| CMC | 0,2 |
| Wasser | 97,3 |
| Dichte: 1003 kg/m³ | |

Die einzelnen Lagen wurden separat hergestellt. Dabei wurde das Hydrokolloid in der angegebenen Menge kaltem Wasser vollständig gelöst. Dann wurde der Grundstoff zu der Hydrokolloidlösung gegeben und mittels eines Rührwerks vermischt. Die Lagen wurden entgast und wie unter Beispiel 1 beschrieben geschichtet.

Bei dem Versuch der Schichtung der beiden Lagen kam es zu einer sofortigen Vermischung. Eine Schichtung war nicht möglich.

## Patentansprüche

1. Mehrlagiges Getränk, wobei jede Lage mindestens ein Hydrokolloid enthält, **dadurch gekennzeichnet, dass** die benachbarten Lagen einen Dichteunterschied von 0,4 bis 10 kg/m³ aufweisen.

2. Mehrlagiges Getränk nach Anspruch 1, **dadurch gekennzeichnet, dass** das Getränk 2, 3, 4, 5 oder 6 Lagen enthält.

3. Mehrlagiges Getränk nach mindestens einem der Ansprüche 1 oder 2, **dadurch gekennzeichnet, dass** der Dichteunterschied 0,4 bis 5 kg/m³ beträgt.

4. Mehrlagiges Getränk nach mindestens einem der Ansprüche 1 oder 2, **dadurch gekennzeichnet, dass** der Dichteunterschied 0,4 bis 1 kg/m³ beträgt.

5. Mehrlagiges Getränk nach mindestens einem der Ansprüche 1 bis 4, **dadurch gekennzeichnet, dass** jede Lage das gleiche Hydrokolloid enthält.

6. Mehrlagiges Getränk nach mindestens einem der Ansprüche 1 bis 5, **dadurch gekennzeichnet, dass** der Gehalt an Hydrokolloid in jeder Lage 0,05 bis 2 Gew.-% beträgt.

7. Mehrlagiges Getränk nach mindestens einem der Ansprüche 1 bis 6, **dadurch gekennzeichnet, dass** der Gehalt an Hydrokolloid in jeder Lage 0,1 bis 0,5 Gew.-% beträgt.

8. Mehrlagiges Getränk nach mindestens einem der Ansprüche 1 bis 7, **dadurch gekennzeichnet, dass** das Hydrokolloid Carboxymethylcellulose ist.

9. Mehrlagiges Getränk nach mindestens einem der Ansprüche 1 bis 8, **dadurch gekennzeichnet, dass** mindestens eine Lage 10 bis 30 Gew.-% Alkohol enthält.

10. Verfahren zur Herstellung eines mehrlagigen Getränks nach mindestens einem der Ansprüche 1 bis 9, **dadurch gekennzeichnet, dass** mehrere Lagen getrennt voneinander mit mindestens einem Hydrokolloid gemischt werden, eine dieser Lagen in einen Behälter eingefüllt wird, anschließend die benachbarte Lage mittels einer Füllvorrichtung zudosiert wird, und gegebenenfalls mindestens eine weitere Lage auf gleiche Weise zudosiert wird, wobei die benachbarten Lagen einen Dichteunterschied von 0,4 bis 10 kg/m³ aufweisen.

11. Verfahren nach Anspruch 10, **dadurch gekennzeichnet, dass** die Füllvorrichtung ein Langrohrfüllventil oder ein Strohhalm ist.

12. Verfahren nach mindestens einem der Ansprüche 10 oder 11, **dadurch gekennzeichnet, dass** die Füllvorrichtung so konzipiert ist, dass die Flüssigkeit an den Wänden des Behälters ausgerichtet wird.

13. Verfahren nach mindestens einem der Ansprüche 10 oder 11, **dadurch gekennzeichnet, dass** die Füllvorrichtung so konzipiert ist, dass die Flüssigkeit entweder über- oder unterschichtet werden kann.

## Claims

1. Multi-layered drink, wherein each layer contains at least one hydrocolloid, **characterized in that** the adjacent layers have a difference in density of 0.4 to 10 kg/m³.

2. Multi-layered drink according to claim 1, **characterized in that** the drink contains 2, 3, 4, 5 or 6 layers.

3. Multi-layered drink according to at least one of claims 1 or 2, **characterized in that** the difference in density is 0.4 to 5 kg/m³.

4. Multi-layered drink according to at least one of claims 1 or 2, **characterized in that** the difference in density is 0.4 to 1 kg/m³.

5. Multi-layered drink according to at least one of claims 1 to 4, **characterized in that** each layer contains the same hydrocolloid.

6. Multi-layered drink according to at least one of claims 1 to 5, **characterized in that** the content of hydrocolloid in each layer is 0.05 to 2 weight percent.

7. Multi-layered drink according to at least one of claims 1 to 6, **characterized in that** the content of hydrocolloid in each layer is 0.1 to 0.5 weight percent.

8. Multi-layered drink according to at least one of claims 1 to 7, **characterized in that** the hydrocolloid is carboxymethylcellulose.

9. Multi-layered drink according to at least one of claims 1 to 8, **characterized in that** at least one layer contains 10 to 30 weight percent of alcohol.

10. Method for the manufacture of a multi-layered drink according to at least one of claims 1 to 9, **characterized in that** several layers are mixed separately with at least one hydrocolloid, one of these layers is filled into a container, subsequently the adjacent layer is added by metered addition by means of a filling device, and possibly at least one further layer is added by metered addition in the same manner, wherein the adjacent layers comprise a difference in density of 0.4 to 10 kg/m³.

11. Method according to claim 10, **characterized in that** the filling device is a long-tube filling valve or a straw.

12. Method according to at least one of claims 10 or 11, **characterized in that** the filling device is designed such that the liquid is oriented at the walls of the container.

13. Method according to at least one of claims 10 or 11, **characterized in that** the filling device is designed such that the liquid can be built up in a layer either above or underneath the other layer.

## Revendications

1. Boisson en plusieurs couches, chaque couche contenant au moins un hydrocolloïde, **caractérisée en ce que** les couches voisines présentent une différence de densité de 0, 4 à 10 kg/m³.

2. Boisson en plusieurs couches selon la revendication 1, **caractérisée en ce qu'**elle contient 2, 3, 4, 5 ou 6 couches.

3. Boisson en plusieurs couches selon l'une au moins des revendications 1 ou 2, **caractérisée en ce que** la différence de densité est de 0,4 à 5 kg/m³.

4. Boisson en plusieurs couches selon l'une au moins des revendications 1 ou 2, **caractérisée en ce que** la différence de densité est de 0,4 à 1 kg/m³

5. Boisson en plusieurs couches selon l'une au moins des revendications 1 à 4, **caractérisée en ce que** chaque couche contient le même hydrocolloïde.

6. Boisson en plusieurs couches selon l'une au moins des revendications 1 à 5, **caractérisée en ce que** la teneur en hydrocolloïde dans chaque couche est de 0,05 à 2 % en poids.

7. Boisson en plusieurs couches selon l'une au moins des revendications 1 à 6, **caractérisée en ce que** la teneur en hydrocolloïde dans chaque couche est de 0,1 à 0,5 % en poids.

8. Boisson en plusieurs couches selon l'une au moins des revendications 1 à 7, **caractérisée en ce que** l'hydrocolloïde consiste en carboxyméthylcellulose.

9. Boisson en plusieurs couches selon l'une au moins des revendications 1 à 8, **caractérisée en ce qu'**au moins une couche contient 10 à 30 % en poids d'alcool.

10. Procédé pour fabriquer une boisson en plusieurs couches selon l'une au moins des revendications 1 à 9, **caractérisé en ce que** plusieurs couches sont mélangées, séparément, avec au moins un hydrocolloïde, l'une de ces couches est versée dans un récipient, puis la couche voisine est ajoutée de manière dosée à l'aide d'un dispositif de remplissage, et éventuellement au moins une autre couche est ajoutée de manière dosée de la même manière, les couches voisines présentant une différence de densité de 0,4 à 10 kg/m³.

11. Procédé selon la revendication 10, **caractérisé en ce que** le dispositif de remplissage consiste en une vanne de remplissage à long tube ou en une paille.

12. Procédé selon l'une au moins des revendications 10 ou 11, **caractérisé en ce que** le dispositif de remplissage est conçu pour que le liquide soit aligné sur les parois du récipient.

13. Procédé selon l'une au moins des revendications 10 ou 11, **caractérisé en ce que** le dispositif de remplissage est conçu pour que le liquide puisse être superposé par-dessus ou par-dessous.
